# EUROPÄISCHE PATENTSCHRIFT

(11) **EP 2 355 677 B1**
(45) Veröffentlichungstag und Bekanntmachung des Hinweises auf die Patenterteilung: **31.10.2012**
(21) Anmeldenummer: 09740685.4
(22) Anmeldetag: 22.10.2009
(51) Int. Cl.: A47C 7/00

(54) **FEDERWEICHE LAGERUNGSZWISCHENSTÜCKE FÜR DREHSTÜHLE**
FEATHERY INTERMEDIATE MOUNTING PIECE FOR ROTATING STOOLS
PIÈCES INTERMÉDIAIRES DE MONTAGE À SOUPLESSE ÉLASTIQUE POUR SIÈGES PIVOTANTS

(30) Priorität: 22.10.2008 DE 202008014043 U
(43) Veröffentlichungstag der Anmeldung: 17.08.2011
(73) Patentinhaber: Tepe-Walser, Silvia, 49124 Georgsmarienhütte (DE)
(72) Erfinder: WALSER, Thomas, CH-8280 Kreuzlingen (CH)
(74) Vertreter: OK pat AG
(86) Internationale Anmeldenummer: PCT/EP2009/063915
(87) Internationale Veröffentlichungsnummer: WO 2010/046447

(56) Entgegenhaltungen:
- DE-U1- 9 305 912
- DE-U1- 20 107 268
- GB-A- 961 345
- US-A- 3 672 721

## Beschreibung

Die Erfindung betrifft federweiche Lagerungszwischenstücke, die federweich auf alle Seiten beweglich sind.

### Beschreibung

Es wird die Priorität der deutschen Gebrauchsmusteranmeldung DE 20 2008 014 043.9 beansprucht, die am 22.10.2008 eingereicht worden ist.

Die herkömmlichen Stuhlfüsse sind mit einem stabilen statischen Fahrwerk ausgestattet. Es ist ebenfalls bekannt, dass die, aus ergonomischen Gründen immer häufiger gewünschte Beweglichkeit im Fuss, in der Säule oder in der Sitzmechanik integriert wird. Dies erfordert jeweils aufwendige Anpassungen der Bauteile.

Aus der Schrift EP 0 761 136-B1 sind Sitzmöbel bekannt, die in vertikaler Richtung abgefedert sind. US 3 672 721 offenbart ein Lagerungszwischenstück zur Verwendung in einem Drehstuhl mit einem elastischen Element.

Aufgabe der Erfindung ist, zwischen den üblichen bestehenden Komponenten ein zusätzliches bewegliches Zwischenstück ohne jegliche Anpassung an das jeweilige Bauteil einzufügen und damit einen Mehrwert für bestehende unbewegliche Komponenten zu erzielen.

Die Erfindung ist im Folgenden anhand in den Zeichnungen dargestellter Ausführungsbeispiele ausführlich beschrieben. Es zeigen
- Fig. 1: eine schematische Ansicht eines Gasliftes mit einem Zwischenteil oben ;
- Fig. 2: eine schematische Ansicht eines Gasliftes mit einem Zwischenteil oben;
- Fig. 3: eine schematische Ansicht eines Gasliftes mit zwei Zwischenteilen oben und unten;
- Fig. 3A: eine schematische Schnittansicht von Fig. 3;
- Fig. 4: eine schematische Detailansicht eines Zwischenteils unten;
- Fig. 5: eine schematische Detailansicht eines Zwischenteils unten;
- Fig. 6: eine schematische Detailansicht eines Zwischenteils unten;
- Fig. 7: eine schematische Detailansicht eines Zwischenteils unten.

Dies wird mit folgenden Massnahmen erreicht:

Es ist bekannt, dass weltweit praktisch alle höhenverstellbaren Gaslifte 1 für Stuhlsäulen ein normiertes Mass von 28mm mit einem Morsekonus (ca. 1.44° konisch) besitzen. Ebenfalls normiert sind die Standrohre 50mm mit Morsekonus 1.44°.

Auf diesen Morsekonus wird *unter der Sitzfläche* üblicherweise bei Drehstühlen die Sitzmechanik mit integrierter Auslösemechanik, die auf der Unterseite eine passende konische Hülse hat (nicht gezeigt), gesteckt.

Sobald diese Verbindung belastet wird, ergibt sich ein stabiler dauerhafter Presssitz. Bei den Standrohren befindet sich der Morsekonus üblicherweise an der Unterseite. Dieser Konus wird in die passende Öffnung der Fusskreuze / Scheiben gesteckt. Das Fussgelenk kann ebenfalls in der gezeigten Form realisiert werden.

Zwischen dem Morsekonus des Gasliftes 1 und der konischen Hülse (nicht gezeigt) der Sitzmechanik wird ein Zwischenteil 2 (in Serie) gesteckt, welches unten eine passende Hülse 3 zur Aufnahme des Gasliftes 1 - und oben einen passenden Konus 4 zum Aufstecken der erwähnten konischen Hülse der Sitzmechanik hat. Das Zwischenteil 2 wird hier auch als Lagerungszwischenstück 2 bezeichnet. Die Sitzmechanik hat üblicherweise einen Auslösehebel, der im Zentrum eines konischen Aufnahmeringes auf einen Auslöseknopf 12 des Gasliftes 1 drückt und damit die Sitzhöhe reguliert.

Die Distanz zwischen diesem Auslösehebel und dem Auslöseknopf 12 wird mit einem Stössel 5 überbrückt, der zur Feinjustierung der Auslösedistanz eine Verstellschraube 6 integriert hat.

Die Beweglichkeit des Zwischenteils 2 und damit des gesamten Stuhloberteils wird mit einem einvulkanisierten, vorgespannten

Gummi 7 erreicht, dessen Härte vorzugsweise 60 - 90 Shore und besonders vorzugsweise 60 - 75 Shore beträgt.

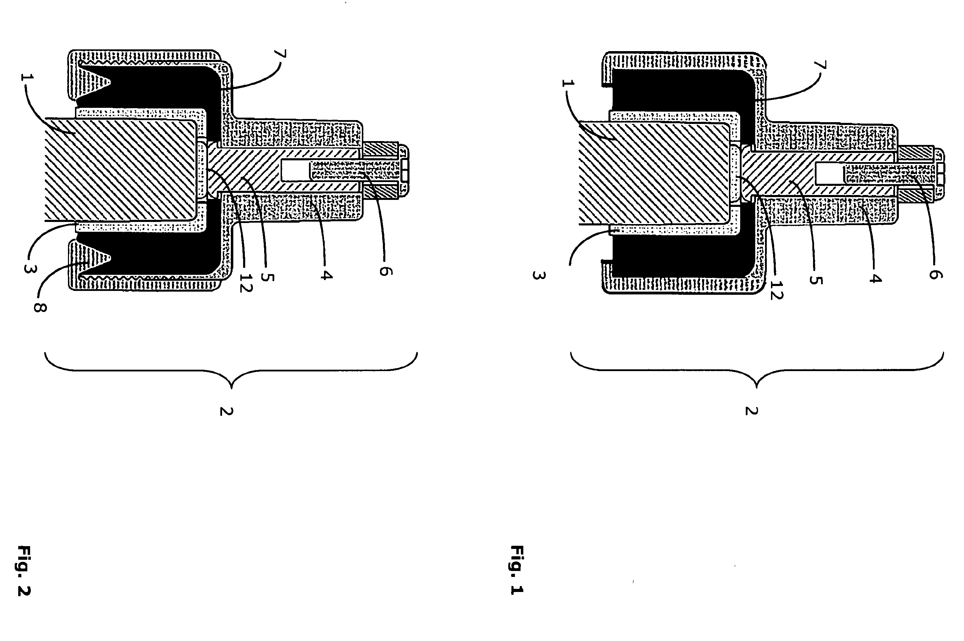

Das in Fig. 2 gezeigte Zwischenteil 2 hat die gleiche Funktion wie das in Fig.1 gezeigte Zwischenteil 2, jedoch ist die seitliche Schwingungsfähigkeit durch Einschränkung mittels eines in den Zylinder gedrehten Keils 8 vorgesehen, wie in Fig. 2 gezeigt. Der Keil 8 bewirkt einerseits eine direkte mechanische Verkleinerung der Bewegungsmöglichkeiten des Gummis 7 und andererseits wird durch den Keil 8 die Ausweichmöglichkeit der Gummimasse des Gummis 7 nach aussen zunehmend einschränkt und damit zusätzlich der Gummi 7 verhärtet einstellbar gemacht.

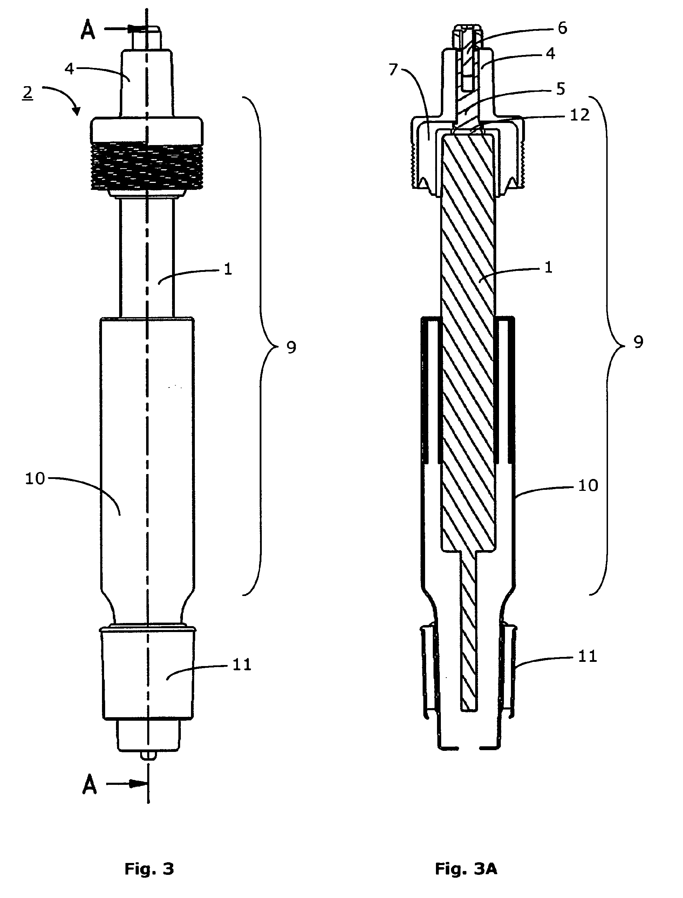

In Fig. 3 und in der in Fig. 3A gezeigten entsprechenden Schnittdarstellung sind die beiden Bauteile 2 und 11, die vorzugsweise kombiniert aber auch einzeln auf die die Stuhlsäule 9 (Zwischenteil 2) und unter die Stuhlsäule 9 (Bauteil 11) gesteckt werden, als Baugruppe gesamthaft dargestellt. Eine Schwenkbewegung von unten erzeugt eine Neigung der Sitzfläche, die durch das obere dazwischen "geschaltete" bewegliche Zwischenteil 2 wieder ausgeglichen werden kann. Dazwischen befindet sich eine Stuhlsäule 9 mit dem Gaslift 1 und dem Standrohr 10.

Das untere bewegliche Steckteil 11 alleine, oder in Kombination mit dem oberen beweglichen Zwischenteil 2 ist insbesondere für ein Sitzen ohne Rollen geeignet.

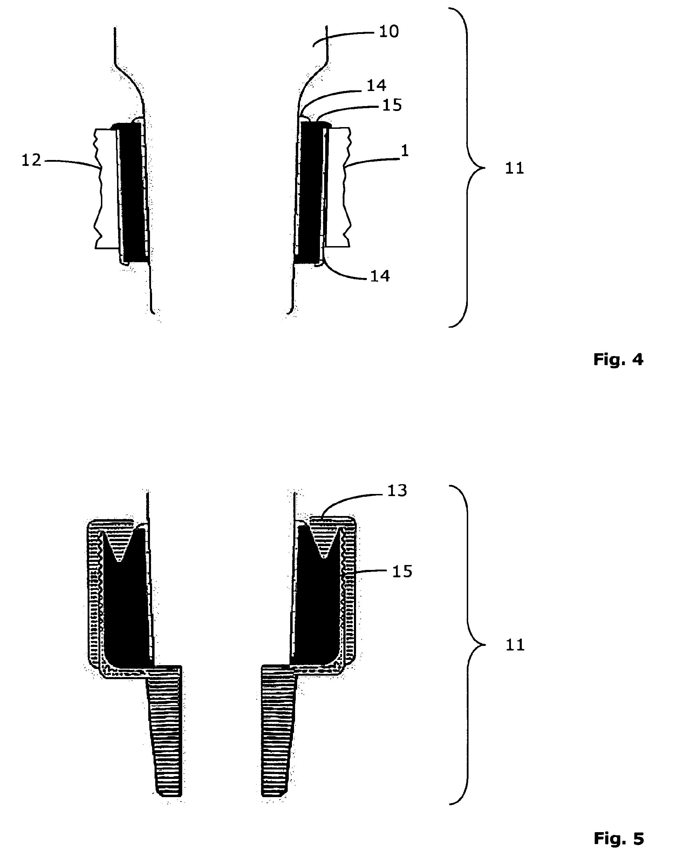

Fig 4. ist eine Detailansicht des Steckers 11 (auch bewegliches unteres Steckteil 11 genannt) gezeigt, der zwischen der üblicherweise konischen Unterseite des Standrohres 10 der Stuhlsäule 9 und der konischen Öffnung des Fusskreuzes 12 angeordnet ist.

Diese konische Öffnung ist weltweit in der Regel 50mm an der Oberseite des Fusskreuzes
und verjüngt sich ebenfalls mit ca. 1.4° nach unten.

Es gibt in wenigen Fällen auch kleinere konische Standrohre 10 für Drehstühle. Das kleinste Mass muss so gewählt sein, dass der genormte Gaslift 1 (28mm) auf der Innenseite des Standrohres 10 bis nach unten gleiten kann, damit die maximale Verstellbarkeit nach unten erhalten bleibt.

Zwischen dem Standrohr 10 und dem Fusskreuz 12 oder einer Fussplatte oder einer Fussscheibe befinden sich zwei dünne Hülsen 14. Der Hohlraum dazwischen wird mit einem vorgespannten Gummi 15 vulkanisiert.

Die konische Form zwischen den Hülsen 14 trägt bei Druck von oben zu einer erhöhten Vorspannung des Gummis 15 bei. Die Härte des Gummis 15 ist zwischen 50 und 80 Shore. (Je dünner der Gummi 15 ist, desto weicher kann der Gummi 15 sein, weil das Druckverhalten bei den schmalen seitlichen "Fluchtwegen" sich verändert).

Fig. 5 hat die gleiche Funktion wie Fig. 4 jedoch ist die seitliche Auslenkung gleich wie bei Fig. 2 mit dem drehbaren zylindrischen Keil 13 regulierbar, der in das Gummi 15 eindringt wobei die Anordnung nur umgedreht wurde.

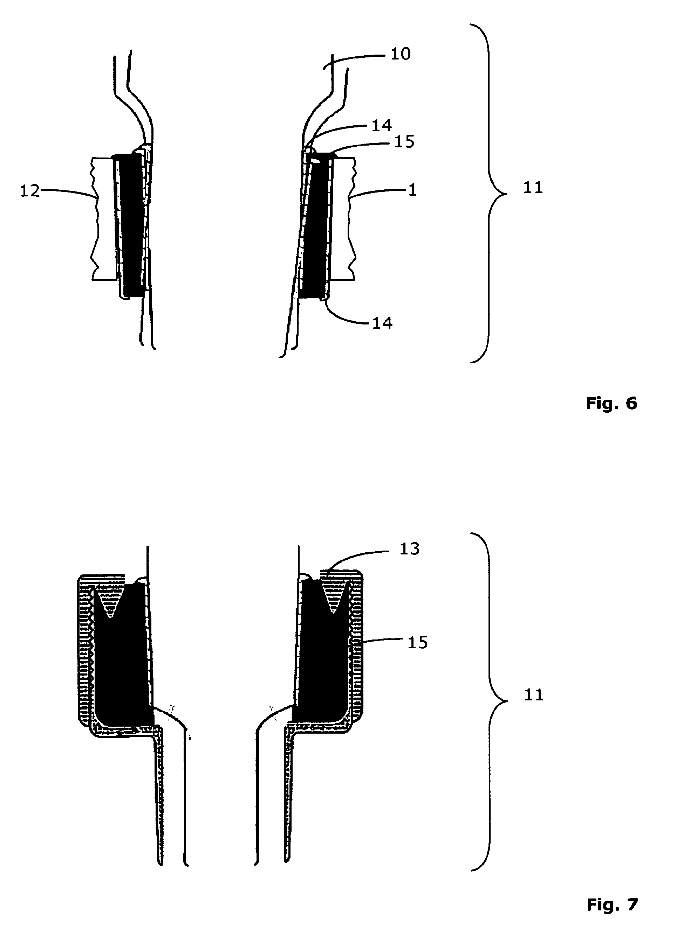

In den Figuren 6 und 7 sind weitere Details der Ausführungsformen nach Fig. 4 und 5 gezeigt.

Falls insbesondere bei Stehhilfen eine grössere seitliche Auslenkung gewünscht wird, so ist in der dargestellten Variante der Konus zur Kraftaufnahme im Stuhlfuss unter oder über dem verstellbaren Weichteil angeordnet.

## Patentansprüche

1. Federweiches Lagerungszwischenstück zur Verwendung in einem Drehstuhl, der eine Stuhlsäule (9) mit Gaslift (1) und normiertem Konus, sowie eine Sitzmechanik mit konischer Hülse hat, wobei das Lagerungszwischenstück ein elastisches Element aufweist, um mittels des Lagerungszwischenstücks eine federweiche Verbindung zwischen der Stuhlsäule (9) und der Sitzmechanik zu gewährleisten, **dadurch gekennzeichnet, dass**
- das Lagerungszwischenstück eine Hülse (3) umfasst, um den normierten Konus der Stuhlsäule (9) aufnehmen zu können, wobei die Hülse (3) mindestens teilweise von einem elastischen Gummielement (7) umgeben ist,
- das Lagerungszwischenstück ein Gehäuse umfasst, das in einem oberen Bereich einen Konus (4) zum Einstecken in die konische Hülse der Sitzmechanik umfasst, und das im unteren Bereich die Hülse (3) samt dem elastischen Gummielement (7) mindestens teilweise radial umschliesst.

2. Federweiches Lagerungszwischenstück nach Anspruch 1, **dadurch gekennzeichnet, dass** das Lagerungszwischenstück so dimensioniert ist, dass es sich auf eine Mehrzahl der normierten
Konen der Gaslifte (1) an Stuhlsäulen (9) und Stuhlsitzmechaniken ohne jegliche Anpassung dazwischen stecken und benutzen lässt.

3. Federweiches Lagerungszwischenstück nach einem der Ansprüche 1 oder 2, **dadurch gekennzeichnet, dass** es einen konischen Zylinder auf der einen Seite und eine konische Öffnung auf der anderen Seite hat, um passgenau zwischen den bestehenden Baugruppen wie ein "Zwischenstecker" montiert werden zu können.

4. Federweiches Lagerungszwischenstück nach einem der Ansprüche 1 bis 3, **dadurch gekennzeichnet, dass** die seitliche Beweglichkeit mit einer Verstellschraube regulierbar ist.

## Claims

1. A soft spring loaded mounting adapter for use in a swivel chair, which has a chair column (9) having gas lift (1) and standardized cone, as well as a seat mechanism having conical sleeve, the mounting adapter having an elastic element, in order to ensure a feathery connection between the chair column (9) and the seat mechanism by means of the mounting adapter,
**characterized in that**
- the mounting adapter comprises a sleeve (3), to be able to receive the standardized cone of the chair column (9), the sleeve (3) being at least partially enclosed by an elastic rubber element (7),
- the mounting adapter comprising a housing, which, in an upper region, comprises a cone (4) for insertion into the conical sleeve of the seat mechanism, and, in the lower region, at least partially radially encloses the sleeve (3), including the elastic rubber element (7).

2. The soft spring loaded mounting adapter according to Claim 1,
**characterized in that** the mounting adapter is dimensioned so that may be plugged onto and used on a plurality of the standardized cones of the gas lifts (1) on chair columns (9) and chair seat mechanisms without any adaptation between them.

3. The soft spring loaded mounting adapter according to one of Claims 1 or 2,
**characterized in that** it has a conical cylinder on one side and a conical opening on the other side, to be able to be installed precisely fitted between the existing assemblies like an "adapter plug".

4. The soft spring loaded mounting adapter according to one of Claims 1 to 3,
**characterized in that** the lateral mobility can be regulated using an adjustment screw.

## Revendications

1. Pièce intermédiaire de montage à souplesse élastique à utiliser dans un siège pivotant qui comporte une colonne de siège (9) avec vérin à gaz (1) et cône normalisé, ainsi qu'un mécanisme d'assise avec douille conique, dans lequel la pièce intermédiaire de montage présente un élément élastique pour garantir, au moyen de la pièce intermédiaire de montage, une liaison à souplesse élastique entre la colonne de siège (9) et la mécanique d'assise, **caractérisée en ce que**
- la pièce intermédiaire de montage comporte une douille (3) permettant de loger le cône normalisé de la colonne de siège (9), la douille (3) étant au moins partiellement entourée d'un élément de caoutchouc élastique (7),
- la pièce intermédiaire de montage comporte un logement qui comporte dans une zone supérieure un cône (4) destiné à être enfiché dans la douille conique de la mécanique de siège, et qui dans la zone inférieure entoure radialement, au moins partiellement, la douille (3) y compris l'élément de caoutchouc élastique (7).

2. Pièce intermédiaire de montage selon la revendication 1, **caractérisée en ce que** la pièce intermédiaire de montage est dimensionnée de façon telle qu'elle peut s'enficher et être utilisée sur plusieurs cônes normalisés de vérin à gaz (1) au niveau des colonnes de siège (9) et des mécaniques d'assise de siège sans adaptation quelconque entre celles-ci.

3. Pièce intermédiaire de montage selon l'une des revendications 1 ou 2, **caractérisée en ce qu'**elle présente un cylindre conique sur un côté et une ouverture conique sur l'autre côté pour pouvoir être montée avec une précision d'adaptation entre les groupes d'éléments existants, à la façon d'une "fiche d'adaptation".

4. Pièce intermédiaire de montage selon l'une des revendications 1 à 3, **caractérisée en ce que** le déplacement latéral peut être régulé au moyen d'une vis de réglage.
